# EUROPÄISCHE PATENTSCHRIFT

(11) **EP 2 623 820 B1**
(45) Veröffentlichungstag und Bekanntmachung des Hinweises auf die Patenterteilung: **29.04.2020**
(21) Anmeldenummer: 13000229.8
(22) Anmeldetag: 17.01.2013
(51) Int. Cl.: F16H 55/14, B64G 1/28

(54) **Zahnrad**
Gear wheel
Roue dentée

(30) Priorität: 31.01.2012 DE 102012001703
(43) Veröffentlichungstag der Anmeldung: 07.08.2013
(73) Patentinhaber: Airbus Defence and Space GmbH, 82024 Taufkirchen (DE)
(72) Erfinder: Kozilek, Horst N., D-88046 Friedrichshafen (DE); Specht, Bernhard, 88633 Heiligenberg (DE)
(74) Vertreter: Schicker, Silvia

(56) Entgegenhaltungen:
- DE-A1- 2 419 189
- DE-A1- 2 714 020
- DE-B- 1 300 408
- DE-C- 311 406
- DE-C- 433 120
- DE-C- 908 317
- DE-U- 7 135 220
- DE-U1- 9 205 374
- FR-A1- 2 438 764
- GB-A- 2 126 686
- US-A- 1 666 576

## Beschreibung

Die Erfindung betrifft ein Zahnrad und insbesondere ein Zahnrad, welches aus mehreren Komponenten besteht. Das erfindungsgemäße Zahnrad lässt sich besonders vorteilhaft in Verbindung mit Schrittmotoren auf Satelliten verwenden. Die Anwendung des Zahnrads ist aber nicht auf diesen Anwendungsbereich beschränkt, sondern lässt sich vorteilhaft in jeder Anordnung oder Baueinheit verwenden, in welcher der Einfluss von Vibrationen, insbesondere Mikro-Vibrationen, abgemindert oder minimiert werden soll oder muss.

Bei Verwendung von Schrittmotoren innerhalb von Anordnungen oder Baueinheiten werden Mikro-Vibrationen (Micro Jitter) durch das Rastmoment des Rotors verursacht. Diese Mikro-Vibrationen werden auf die Strukturteile der Anordnung bzw. der Baueinheit übertragen. Dies führt zum Beispiel zu Störungen in der Anordnung bzw. Baueinheit insbesondere in deren Instrumente oder zu Richtfehlern. Die Mikro-Vibrationen werden zum Beispiel durch Dauermagnete in dem rotierenden Teil des Motors produziert und als Beschleunigungen über das Zahnrad auf die Anordnung bzw. Baueinheit übertragen.

Aus dem Stand der Technik sind unterschiedliche Varianten einer elastischen Verbindung eines inneren Teils eines Zahnrads mit einem Zahnkranz vorbekannt. Die DE 92 05 374 U1, die DE 27 14 020 A1, die DE 433 120 A, die DE 1 300 408 A und die gattungsgemäße DE 311 406 C offenbaren Verbindungselemente zwischen dem inneren Teil des Zahnrads und dem Zahnkranz, die zwischen dem Zahnkranz und dem inneren Teil in spiralförmig einwärts oder auswärts gerichteten Bögen verlaufen. Die FR 2 438 764 A, die DE 24 19 189 A1, die GB 2 126 686 A und die DE 908 317 C offenbaren Zahnräder, bei denen der innere Teil des Zahnrads mit dem Zahnkranz über elastische radiale Streben verbunden ist. Diese Streben sind sämtlich einteilig mit dem inneren Teil des Zahnrads und dem Zahnkranz ausgebildet, bestehen also aus demselben Material wie das Zahnrad.

Die DE 71 35 220 U zeigt und beschreibt ein zweigeteiltes Zahnrad, bei welchem der Zahnkranz mit dem inneren des Zahnrads über einen umlaufenden elastischen Profilring aus Gummi oder gummiähnlichem Material mit kreisförmigem Querschnitt verbunden ist.

Es ist die Aufgabe der Erfindung, ein Zahnrad so auszulegen, dass Wirkungen von Vibrationen, insbesondere von Mikro-Vibrationen, reduziert werden, ohne dass die Präzision eines damit ausgestatteten Zahnrad-Getriebes nachteilig beeinflusst wird.

Diese Aufgabe wird gelöst durch ein Zahnrad gemäß Anspruch 1.

Vorteilhafte Aus- bzw. Weiterbildungen der Erfindung sind durch die Unteransprüche gegeben.

Das erfindungsgemäße Zahnrad umfasst einen inneren Teil, welcher mit einem Vibrationen, insbesondere Mikro-Vibrationen, verursachenden Antrieb verbunden ist, z.B. mit der Antriebswelle eines Motors insbesondere eines Schrittmotors auf einem Satelliten. Weiterhin umfasst das Zahnrad ein die Vibrationen minderndes Verbindungselement und einen Zahnkranz, wobei das Verbindungselement kraftschlüssig mit dem inneren Teil des Zahnrads und dem Zahnkranz verbunden ist. Das Verbindungselement ist als Federblech ausgebildet. Die Erfindung vermindert besonders vorteilhaft Vibrationen, insbesondere Mikro-Vibrationen, welche auf den Zahnkranz wirken.

Das Federblech ist aus Aluminium, Titan oder Federstahl hergestellt. Besonders vorteilhaft ist es ferner, wenn das Federblech eine Dicke von mindestens 0,1 mm hat.

Das Verbindungselement des Zahnrads kann auch, aber nicht beansprucht, als vergossener Kunststoffring ausgebildet sein. Besonders vorteilhaft ist es, aber nicht beansprucht, wenn der Kunststoffring aus elastischem synthetischem Material gefertigt ist, z.B. RTV-Kunststoff, Silikon oder einem Harzsystem. Besonders vorteilhaft ist es ferner, aber nicht beansprucht, wenn der Kunststoffring eine Dicke von mindestens 1/10 mm bis zu mehreren Millimetern hat.

Die Erfindung soll nachfolgend anhand von Ausführungsbeispielen näher erläutert werden.

In den zugehörigen Zeichnungen zeigen:
- Fig. 1:: Darstellung einer nicht beanspruchten Ausführungsform des Zahnrads mit Kunststoffring
- Fig. 2:: Darstellung einer möglichen Ausführungsform des erfindungsgemäßen Zahnrads mit Federblech

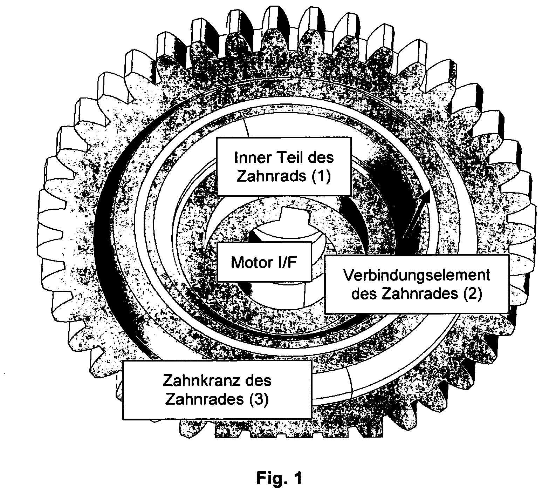

Fig. 1 zeigt eine nicht beanspruchte Ausführungsform des Zahnrads. Gemäß der Ausführung besteht das Zahnrad aus drei Teilen. Diese Teile sind ein innerer Teil (1) des Zahnrads, ein Verbindungselement (2) des Zahnrads und der Zahnkranz (3) des Zahnrads.

Der innere Teil (1) des Zahnrads ist dabei so ausgebildet, dass er zum Beispiel über eine Antriebswelle mit einem Motor verbunden werden kann. Der Motor bzw. die Antriebswelle werden hier nur beispielhaft als mögliche Verursacher von Mikro-Vibrationen genannt. Die Erfindung ist ebenso auf andere Verursacher von Vibrationen, insbesondere Mikro-Vibrationen, erfolgreich anwendbar.

Das Verbindungselement (2) ist so ausgebildet, dass die Vibrationen, insbesondere Mikro-Vibrationen, welche von der Antriebswelle des Motors verursacht werden und auf den Zahnkranz (3) wirken, durch die reduzierte Steifigkeit (Trägheit des Systems) gemindert werden. Dazu ist das Verbindungselement (2) kraftschlüssig mit dem inneren Teil (1) und dem Zahnkranz (3) verbunden. Der erreichte Reduktionsfaktor ist dabei von der Dicke und der Steifigkeit des Verbindungselements (2) abhängig.

Eine besondere Bedeutung hat die Steifigkeit des Verbindungselements (2), welches zum Beispiel als Einzelbleche oder Ring ausgebildet sein kann.

Gemäß der nicht beanspruchten Ausführungsform in Fig. 1 ist das Verbindungselement (2) des Zahnrads als vergossener Kunststoffring ausgebildet. Der Kunststoffring dient dabei als kraftübertragendes Element. Gemäß der Erfindung ist es besonders vorteilhaft, wenn der Kunststoffring aus elastischem synthetischem Material, z.B. RTV-Kunststoff (RTV-S = 961), Silikon oder Harzsystemen gefertigt ist. Für vorteilhafte Abminderungseigenschaften sollte die Dicke des Kunststoffrings zwischen 1/10 mm bis zu mehreren Millimetern betragen.

Ein technischer Vorteil dieser nicht beanspruchten Ausführungsform ist es, dass die Amplitude der Vibrationen, insbesondere Mikro-Vibrationen, auf einen niedrigeren Level reduziert wird. Dabei werden zehnmal geringere Amplituden erzielt verglichen mit dem Fall ohne Kunststoffring. Die Einwirkung der Vibrationen, insbesondere Mikro-Vibrationen, des Motors auf Instrumente und den Satelliten werden somit minimiert.

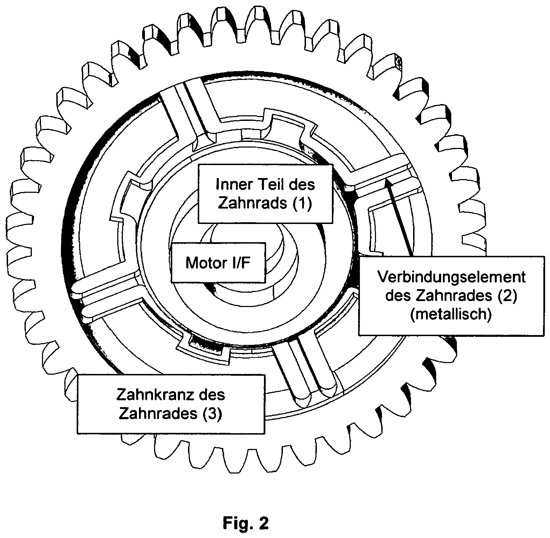

Gemäß der beanspruchten Ausführungsform in Fig. 2 ist das Verbindungselement des Zahnrads (2) als Federblech ausgebildet. Das Federblech dient dabei als kraftübertragendes Element. Dieses wurde aus dem Zahnrad herausgefräst oder in Nuten eingesetzt. Gemäß der Erfindung ist es besonders vorteilhaft, wenn das Federblech aus Aluminium, Titan oder Federstahl gefertigt ist. Für vorteilhafte Schwingungseigenschaften sollte die Dicke des Federblechs mindestens 0,1 mm betragen.

Ein technischer Vorteil dieser Ausführungsform ist es, dass die Amplitude Vibrationen, insbesondere Mikro-Vibrationen, auf einen niedrigeren Level reduziert wird. Dabei werden zehnmal geringere Amplituden erzielt verglichen mit dem Fall ohne Federblech. Die Einwirkung der Vibrationen, insbesondere Mikro-Vibrationen, des Motors auf Instrumente und den Satelliten werden somit minimiert.

## Patentansprüche

1. Zahnrad umfassend:
- einen inneren Teil (1), welcher mit einem Vibrationen verursachenden Antrieb verbunden ist,
- ein Verbindungselement (2), und
- einen Zahnkranz (3), wobei das Verbindungselement (2):
- als Federblech ausgebildet ist, und
- kraftschlüssig mit dem inneren Teil (1) des Zahnrads und dem Zahnkranz (3) verbunden ist,
wobei das Federblech als kraftübertragendes Element dient, und wobei das Federblech aus dem Zahnrad herausgefräst ist oder in Nuten eingesetzt ist, sodass die verursachten Vibrationen abgemindert werden, **dadurch gekennzeichnet , dass** das Federblech aus Aluminium, Titan oder Federstahl hergestellt ist.

2. Zahnrad nach Anspruch 1, **dadurch gekennzeichnet, dass** das Federblech eine Dicke von mindestens 0,1 mm hat.

3. Zahnrad nach einem der vorhergenannten Ansprüche, **dadurch gekennzeichnet, dass** der innere Teil (1) des Zahnrads über eine Antriebswelle mit einem Motor verbindbar ist.

4. Zahnrad nach Anspruch 3, **dadurch gekennzeichnet, dass** der innere Teil (1) des Zahnrads mit dem Motor der ein Schrittmotor auf einem Satelliten ist, verbindbar ist.

## Claims

1. A gear wheel comprising:
- an inner part (1) which is connected to a vibration causing drive,
- a connecting element (2), and
- a ring gear (3),
wherein the connecting element (2):
- is designed as a spring sheet, and
- is connected to the inner part (1) of the gear wheel and the ring gear (3) in a force-fitting manner,
wherein the spring sheet serves as a force-transmitting element, and wherein the spring sheet is milled out of the gear wheel or inserted in grooves so that the caused vibrations are reduced,
**characterised in that** the spring sheet is made of aluminium, titanium or spring steel.

2. The gear wheel according to claim 1, **characterised in that** the spring sheet has a thickness of at least 0.1 mm.

3. The gear wheel according to any of the preceding claims, **characterized in that** the inner part (1) of the gear wheel is connectable to a motor via a drive shaft.

4. The gear wheel according to claim 3, **characterized in that** the inner part (1) of the gear wheel is connectable to the motor, which is a stepper motor on a satellite.

## Revendications

1. Roue dentée comprenant :
- une partie intérieure (1) reliée à un entraînement provoquant des vibrations,
- un élément de liaison (2), et
- une couronne dentée (3),
dans laquelle l'élément de liaison (2) :
- est conçu comme une tôle élastique, et
- est relié par friction avec la partie intérieure (1) de la roue dentée et la couronne dentée (3),
dans laquelle la tôle élastique sert d'élément de transmission de force, et dans laquelle la tôle élastique est fraisée ou insérée dans des rainures, de sorte que les vibrations provoquées sont diminuées, **caractérisée en ce que** la tôle élastique est fabriquée en aluminium, en titane ou en acier à ressorts.

2. Roue dentée selon la revendication 1, **caractérisée en ce que** la tôle élastique présente une épaisseur d'au moins 0,1 mm.

3. Roue dentée selon l'une des revendications précédentes, **caractérisée en ce que** la partie intérieure (1) de la roue dentée peut être reliée à un moteur par un arbre d'entraînement.

4. Roue dentée selon la revendication 3, **caractérisée en ce que** la partie intérieure (1) de la roue dentée peut être reliée au moteur, qui est un moteur pas-à-pas sur un satellite.
